# EUROPÄISCHE PATENTSCHRIFT

(11) **EP 2 309 145 B1**
(45) Veröffentlichungstag und Bekanntmachung des Hinweises auf die Patenterteilung: **26.06.2013**
(21) Anmeldenummer: 10010684.8
(22) Anmeldetag: 27.09.2010
(51) Int. Cl.: F16D 3/77, F16F 15/12

(54) **Verbindungsanordnung**
Connection assembly
Dispositif de raccordement

(30) Priorität: 07.10.2009 DE 102009048688
(43) Veröffentlichungstag der Anmeldung: 13.04.2011
(73) Patentinhaber: Audi AG, 85045 Ingolstadt (DE)
(72) Erfinder: Märkl, Johann, 85049 Ingolstadt (DE)
(74) Vertreter: Lehle, Josef

(56) Entgegenhaltungen:
- US-A- 5 616 002
- US-A1- 2002 096 006
- US-A1- 2002 184 960
- US-B1- 6 446 765

## Beschreibung

Die Erfindung betrifft eine Verbindungsanordnung gemäß dem Oberbegriff des Anspruchs 1, insbesondere eine Anordnung, mit der sich zwei rotierende Bauteile zwecks Übertragung eines Drehmoments durch Schrauben lösbar miteinander verbinden lassen, wie zum Beispiel zwei Bauteile eines Antriebsstrangs eines Kraftfahrzeugs.

Verbindungsanordnungen der eingangs genannten Art als Teil eines Antriebsstrangs eines Kraftfahrzeugs sind zum Beispiel aus der DE 102 12 033 B3, der DE 10 2007 037 743 A1 und der DE 10 2006 052 144 A1 bekannt. Die aus diesen Druckschriften bekannten Verbindungsanordnungen dienen dazu, einen an der Kurbelwelle oder einem Zweimassenschwingungsdämpfer einer Brennkraftmaschine des Kraftfahrzeugs angeflanschten scheibenförmigen Mitnehmer drehfest mit einem Wandlergehäuse oder einem anderen Getriebeaggregat des Kraftfahrzeugs zu verbinden.

Die bekannten Verbindungsanordnungen weisen jeweils eine Mehrzahl von Schrauben zum drehfesten Verbinden der axial hintereinander liegenden, rotierenden Bauteile auf, wobei die Schrauben unter einem Winkel von etwa 45 Grad zur Drehachse der Kurbelwelle ausgerichtet sind. Derart ausgerichtete Schrauben benötigen jedoch einen relativ großen axialen Bauraum, wodurch sich der Antriebsstrang zwischen der Brennkraftmaschine und dem Getriebe und damit die Baulänge des gesamten Antriebsaggregats in unerwünschter Weise verlängert.

US 5,616,002 offenbart eine Verbindungsanordnung nach dem Oberbegriff des Anspruchs 1.

Ausgehend hiervon liegt der Erfindung die Aufgabe zugrunde, eine Verbindungsanordnung der eingangs genannten Art dahingehend zu verbessern, dass der notwendige axiale Bauraum verkleinert werden kann.

Diese Aufgabe wird erfindungsgemäß dadurch gelöst, dass das eine als Blechteil ausgebildete Bauteil, radial einwärts von den Durchtrittöffnungen mit Ausstanzungen und das andere Bauteil um die Innengewinde herum mit Verdickungen versehen ist, die in axialer Richtung in oder durch die Ausstanzungen ragen.

Der Erfindung liegt der Gedanke zugrunde, dass die beiden miteinander zu verbindenden Bauteile radial einwärts von den Schrauben in axialer Richtung hintereinander untergebracht werden müssen, was noch einen relativ großen axialen Bauraum bedingt, da das mit den Innengewinden versehene Bauteil im Bereich der Innengewinde gewisse axiale Mindestabmessungen aufweisen muss. Dieser axiale Bauraum kann jedoch erheblich verkleinert werden, wenn erfindungsgemäß das Blechteil radial einwärts von den Durchtrittsöffnungen mit Ausstanzungen und das andere Bauteil um die Innengewinde herum mit Verdickungen versehen wird, die nach dem Verschrauben der beiden Bauteile in axialer Richtung in die Ausstanzungen oder durch diese hindurch ragen. Mit Verdickungen ist gemeint, dass das mit den Innengewinden versehene Bauteil zwischen zwei in Umfangsrichtung benachbarten Innengewinden kleinere axiale Abmessungen aufweist als im Bereich der Innengewinde. Außerdem weisen die beiden Bauteile durch die erfindungsgemäßen Merkmale Notlauf- oder Notmitnahmeeigenschaften auf, d.h. die Bauteile greifen auch ohne die Schrauben so ineinander, dass das angetriebene Bauteil vom antreibenden Bauteil mitgenommen wird. Darüber hinaus wird an den Schraubverbindungen für eine radiale "Weichheit" gesorgt.

Gemäß einer vorteilhaften Weiterbildung der Verbindungsanordnung ist vorgesehen, dass die Schrauben unter einem steilen Neigungswinkel oder senkrecht zur Drehachse ausgerichtet sind. Durch die steilere, mehr radiale Ausrichtung der Schrauben wird insbesondere der zur Unterbringung der Schrauben benötigte axiale Bauraum verkürzt beziehungsweise verkleinert, wodurch der Gesamtbauraum der Verbindungsanordnung weiter verkleinert wird. Dadurch, dass der die Innengewinde aufweisende verdickte Bereich des anderen Bauteils in oder durch die Ausstanzungen des Blechteils ragt, wird zum einen eine besonders kompakte Verbindungsanordnung geboten, bei der zum anderen eine gute Erreichbarkeit der Schrauben gewährleistet wird.

Mit Ausstanzungen sind Stanzöffnungen im Blechteil gemeint, aus denen das ausgestanzte Material mindestens teilweise entfernt worden ist, um Platz für die Verdickungen des anderen Bauteils zu schaffen.

Um den axialen Baurum so klein wie möglich zu halten, sind die Längsachsen der Schrauben bzw. die Gewindeachsen der Innengewinde unter einem Winkel von mehr als 45 Grad, bevorzugt unter einem Winkel von mehr als 60 Grad und am besten unter einem Winkel von mehr als 75 Grad zur Drehachse der beiden Bauteile ausgerichtet.

Um im Bereich der Schraubverbindungen für eine flächige Anlage der beiden Bauteile zu sorgen, weist das umgeformte Blechteil vorteilhaft einen mit den Durchtrittsöffnungen versehenen umgebogenen äußeren Rand auf, der senkrecht zu den Längsachsen der Schrauben ausgerichtet ist und mit seiner Innenseite um die Mündung der Innengewinde herum gegen das andere Bauteil anliegt.

Um die axiale Breite dieses umgebogenen Randes möglichst klein zu halten, jedoch trotzdem um die Durchtrittsöffnungen herum genügend Material bereitzustellen, um einen sicheren Halt der Schrauben im umgeformten Blechteil zu gewährleisten, sieht eine weitere vorteilhafte Ausgestaltung der Erfindung vor, dass der umgebogene äußere Rand um die Durchtrittsöffnungen herum durch aus den Ausstanzungen heraus gebogenes Blechmaterial verbreitert ist.

Eine weitere bevorzugte Ausgestaltung der Erfindung sieht vor, dass mindestens eine der Schrauben als Passschraube mit Passsitz in die zugehörige Durchtrittsöffnung des Blechteils und in eine Stufenbohrung des anderen Bauteils eingesetzt ist, die einen mit dem Innengewinde versehenen weiteren Teil und einen angrenzenden engeren Teil aufweist, wobei die Passschraube bevorzugt ein innerhalb der Durchtrittsöffnung angeordnetes zylindrisches Stirnende und ein in den engeren Teil der Stufenbohrung ragendes konisch verjüngtes Stirnende aufweist und bis zum Kontakt dieses konischen Stirnendes mit einer Ringschulter zwischen dem engeren und dem weiteren Teil der Stufenbohrung in das Innengewinde eingeschraubt ist.

Eine weitere Form der tangentialen Positionierung der zu verbindenden Bauteile besteht darin, dass eine oder mehrere Verdickungen des einen Bauteils zumindest in Umfangsrichtung gesehen passgenau in die Aussparungen des Blechteils eingreifen. Alternativ oder zusätzlich dazu greifen eine oder mehrere Verdickungen zumindest an einem radialen Ende passgenau in die Aussparungen des Blechteils ein, um eine radiale Zentrierung der Bauteile zueinander zu erlangen.

Um die Herstellungskosten der Verbindungsanordnung bzw. des Antriebsstrangs zu verringern, kann vorteilhaft auch das mit den Innengewinden versehene Bauteil von einem umgeformten Blechteil gebildet werden. Um eine akustische Beeinträchtigung zu vermeiden, sind die Ausstanzungen und/oder Verdickungen vorteilhafterweise derart ausgebildet, dass sie im montierten Zustand keine Kanten und/oder Vorsprünge (beziehungsweise Rücksprünge) bilden. Zusätzlich oder alternativ kann eine mit-rotierende Abdeckung vorgesehen sein.

Im Folgenden wird die Erfindung anhand von zwei in der Zeichnung dargestellten Ausführungsbeispielen näher erläutert. Es zeigen:
Fig. 1 eine perspektivische Ansicht eines Zweimassenschwungrads für den Antriebs-strang eines Kraftfahrzeugs mit einem angeschraubten Mitnehmerblech;
Fig. 2 eine Schnittansicht des Zweimassenschwungrads entlang der Linie I-I der Fig. 1, jedoch nach der Montage an einer Kurbelwelle einer Brennkraftmaschine;
Fig. 3 eine vergrößerte Ansicht des Ausschnitts III in Fig. 2 jedoch mit einer anderen Blickrichtung;
Fig. 4 eine vergrößerte Ansicht entsprechend Fig. 3, jedoch von einem Schnitt entlang der Linie IV-IV der Fig. 1;
Fig. 5 eine vergrößerte perspektivische Ansicht des Ausschnitts V in Fig. 1;
Fig. 6 eine vergrößerte Ansicht des Ausschnitts VI in Fig. 4;
Fig. 7 eine teilweise weg geschnittene Vorderseitenansicht eines als umgeformtes Blechteil ausgebildeten Teils des Zweimassenschwungrads;
Fig. 8 eine Schnittansicht entlang der Linie VIII-VIII der Fig. 7, jedoch nach dem Eindrehen einer Schraube;
Fig. 9 eine Schnittansicht entlang der Linie IX-IX der Fig. 7 und 8;
Fig. 10 eine Schnittansicht entlang der Linie X-X der Fig. 7 und 8;
Fig. 11 eine teilweise weg geschnittene Vorderseitenansicht des Blechteils vor dem Umformen.

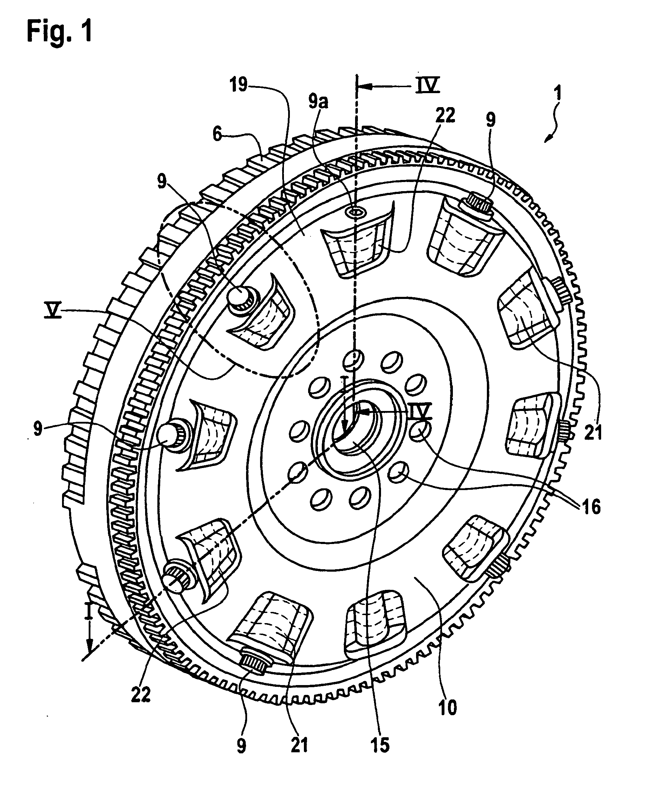

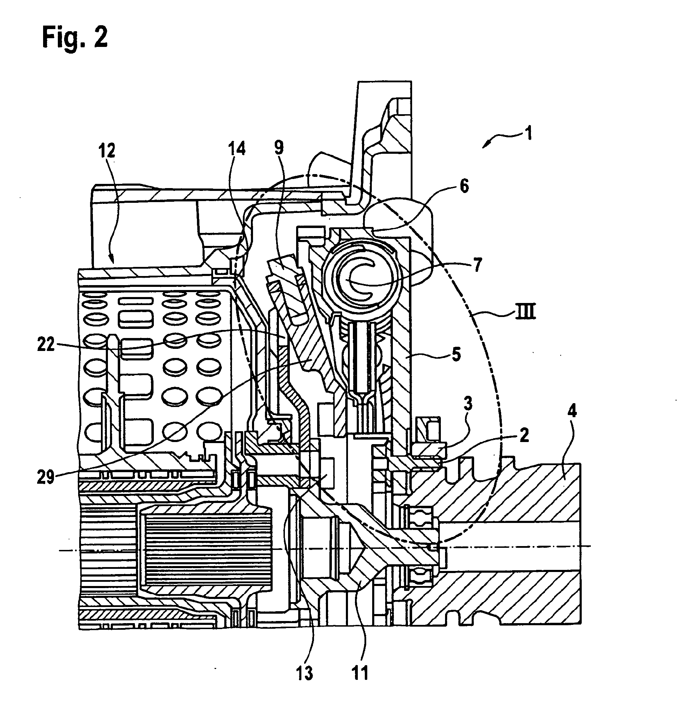

Das in Fig. 1 dargestellte Zweimassenschwungrad 1 dient als Drehmomentübertragungs- und Drehschwingungsdämpfungseinrichtung zur Übertragung eines von einer Brennkraftmaschine eines Kraftfahrzeugs (nicht dargestellt) erzeugten Drehmoments sowie zur Dämpfung von Drehmomentschwingungen der Brennkraftmaschine. Wie am besten in Fig. 1 und 2 dargestellt, umfasst das Zweimassenschwungrad 1 ein durch Schrauben 2 an einem Schraubflansch 3 der Kurbelwelle 4 der Brennkraftmaschine angeflanschtes Eingangsteil 5, das einen am äußeren Umfang mit einem Anlasserzahnkranz 6 versehenen Schwingungsdämpferkäfig bildet, einen innerhalb des Schwingungsdämpferkäfigs des Eingangsteils 5 untergebrachten Energiespeicher, der eine Mehrzahl von Schraubenfedern 7 umfasst, sowie ein über die Schraubenfedern 7 torsionsweich mit dem Eingangsteil 5 verbundenes allgemein rotationssymmetrisches Ausgangsteil 8.

Das Ausgangsteil 8 ist durch eine Mehrzahl von Schrauben 9 drehfest mit einem allgemein rotationssymmetrischen Mitnehmerblech 10 verbunden. Das Mitnehmerblech 10 wiederum ist jenseits des Zweimassenschwungrads 1 auf eine mit der Kurbelwelle 3 fluchtende Welle 11 eines Getriebes 12 beziehungsweise dessen Eingangskomponente, wie zum Beispiel ein Drehmomentwandler oder eine Kupplung, des Kraftfahrzeugs aufgeschoben und durch Befestigungsschrauben 13 drehfest mit einem rotierenden Teil 14 des Getriebes 12 beziehungsweise dessen Eingangskomponente verbunden. Wie am besten in Fig. 1 dargestellt, ist das Mitnehmerblech 10 zu diesem Zweck mit einer mittigen Öffnung 15 für die Welle 11 und einem die Öffnung 15 umgebenden Kranz von Schraubenöffnungen 16 versehen.

Die Schrauben 9, mit denen das Mitnehmerblech 10 spielfrei und lösbar am Ausgangsteil 8 befestigt ist, sind in regelmäßigen Winkelabständen am äußeren Umfang des Ausgangsteils 8 und des Mitnehmerblechs 10, d.h. auf einem großen Durchmesser angeordnet. Damit die Schraubverbindungen zwischen dem Ausgangsteil 8 und dem Mitnehmerblech 10 möglichst wenig axialen Bauraum beanspruchen, sind die Schrauben 9 unter einem steilen Winkel von etwa 75 bis 80 Grad zur Drehachse 17 der Kurbelwelle 4 und der Welle 11 ausgerichtet. Wobei hier auch noch steilere Winkel oder sogar eine senkrechte Ausrichtung der Schrauben 9 denkbar sind. Dabei ist jede der Schrauben 9 durch eine zugehörige Durchtrittsöffnung 18 in einem umgebogenen umlaufenden äußeren Rand 19 des Mitnehmerblechs 10 hindurch in ein zugehöriges Innengewinde 20 des Ausgangsteils 8 eingeschraubt. Der Rand 19 des Mitnehmerblechs 10 ist in axialer Richtung derart abgebogen, dass er senkrecht zu den Gewindeachsen der Innengewinde 20 ausgerichtet ist. Die ausgestanzten Durchtrittsöffnungen 18 im Rand 19 des Mitnehmerblechs 10 sind so angeordnet, dass sie nach dem Aufsetzen des Mitnehmerblechs 10 auf das Ausgangsteil 8 des Zweimassenschwungrades 1 mit den Gewindeachsen der Innengewinde 20 fluchten.

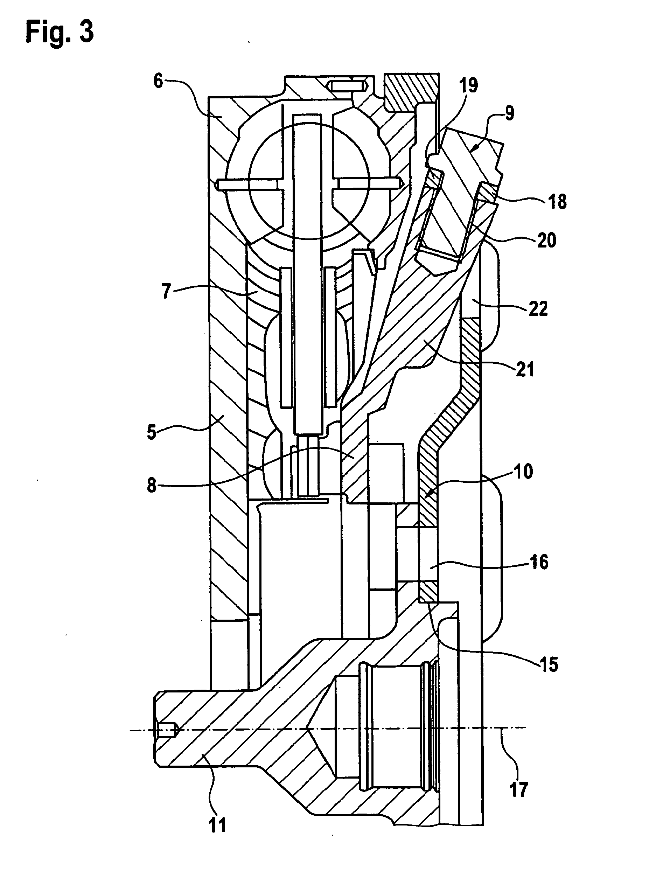

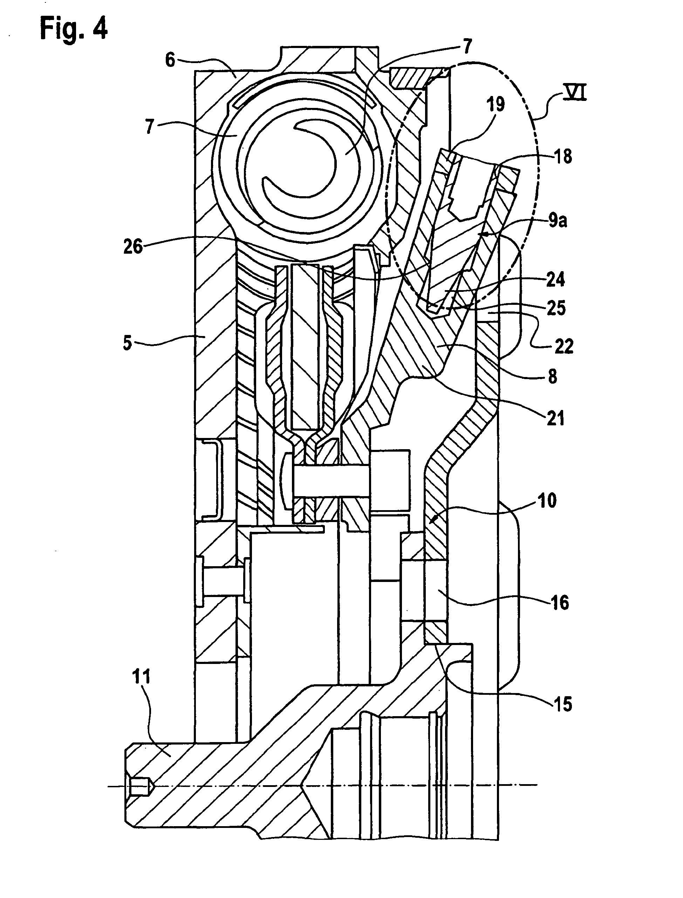

Zur Unterbringung der Innengewinde 20 weist das Ausgangsteil 8 im Bereich von jeder der Schraubverbindungen eine Verdickung 21 auf, die das Innengewinde 20 umgibt. Bei dem in den Figuren 1 bis 6 dargestellten Ausführungsbeispiel sind die Verdickungen 21 in das Ausgangsteil 8 eingeformt und stehen über die zum Mitnehmerblech 10 benachbarte Seite des Ausgangsteils 8 über.

Um zu vermeiden, das der für das Zweimassenschwungrad 1 und das Mitnehmerblech 10 benötigte axiale Bauraum durch die zum Einschneiden der Innengewinde 20 erforderlichen Verdickungen 21 vergrößert wird, ist das umformtechnisch hergestellte Mitnehmerblech 10 im Bereich von jeder der Schraubverbindungen 9, 20 mit einer ausgestanzten Aussparung 22 versehen, die zur Aufnahme der Verdickung 21 dient, wie am besten in den Figuren 1 3, 4 und 5 dargestellt.

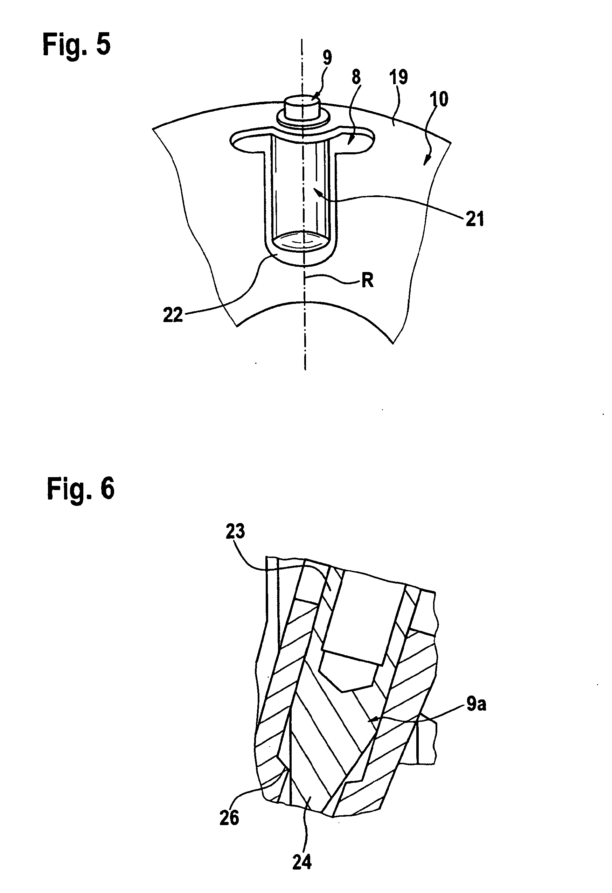

Wie am besten in Fig. 5 dargestellt, weist die Verdickung 21 bei dem Ausführungsbeispiel in den Figuren 1 bis 6 eine allgemein zylindrische Form auf, deren Längsachse sich entlang eines Radius R des Ausgangsteils 8 bzw. des Mitnehmerblechs 10 erstreckt. Die aus dem Mitnehmerblech 10 ausgestanzte Aussparung 22 besitzt dort eine zur Verdickung 21 allgemein komplementäre Form, deren Ränder entlang des größten Teils der Länge der Verdickung 21 in einem geringen Abstand von dieser angeordnet sind und parallel zu dem Radius R verlaufen. Durch den nahezu formschlüssigen Eingriff der Verdickungen 21 in die zugehörigen Aussparungen 22 wird das Mitnehmerblech 10 selbst dann in einer Notmitnahme vom Ausgangsteil 8 mitgenommen, wenn die Schrauben 9 nicht in die Innengewinde 20 eingeschraubt worden sind. Bevorzugt sind die Verdickung 21 und die Aussparung 22 derart ausgebildet, dass sie seitlich (tangential) und/oder radial passgenau ineinandergreifen, sodass eine formschlüssige tangentiale Ausrichtung beziehungsweise radiale Zentrierung mittels der Verdickung 21 und Aussparung 22 geboten wird. Für die Zentrierfunktion weisen die Verdickung(en) 21 und die Ausstanzung(en) 22 jeweils an ihrem zur Drehachse weisenden Ende eine Krümmung auf, die einem entsprechenden Radius zu der Drehachse entspricht. Dies hat den Vorteil, dass insbesondere die radiale Passgenauigkeit der Verdickungen 21 durch eine einfache Drehbearbeitung des Bauteils 8 erfolgen kann.

In der Nähe des umgebogenen oberen Randes 19 des Mitnehmerblechs 10 sind die Aussparungen 22 hingegen etwas breiter, da das an dieser Stelle aus dem Mitnehmerblech 10 ausgestanzte Material nicht wie das Material aus dem übrigen Teil der Aussparungen 22 als Stanzabfall verworfen wird, sondern vom Ausgangsteil 8 weg nach außen gebogen wird, um den umlaufenden Rand 19 des Mitnehmerblechs 10 im Bereich der Schraubverbindungen um die Durchtrittsöffnungen 18 herum zu verbreitern. Auf diese Weise kann der Rand 19 entlang des restlichen Umfangs des Mitnehmerblechs 10 schmaler gehalten und dadurch der axial benötigte Bauraum weiter verkleinert werden.

Wie am besten in Fig. 1, 4 und 6 dargestellt, ist im vorliegenden Ausführungsbeispiel eine der Schrauben 9 als Passschraube 9a ausgebildet, die mit Passsitz durch die zugehörige Durchtrittsöffnung 18 hindurch in das zugehörige Innengewinde 20 des Ausgangsteils 8 eingeschraubt ist. Im Unterschied zu den übrigen Schrauben 9 der Hauptverschraubung, die als Inbus-Kopfschrauben ausgebildet sind und einen Bund aufweisen, der um die Durchtrittsöffnung 18 herum von außen her gegen den Rand 19 des Mitnehmerblechs 10 anliegt, wird die Passschraube 9a vorliegend von einem Inbus-Gewindestift gebildet, der in eine Stufenbohrung 25 im Ausgangsteil 8 eingeschraubt ist. Das zylindrische äußere Stirnende 23 der Passschraube 9a weist um die Inbus-Öffnung herum einen Außendurchmesser auf, der dem Innendurchmesser der Durchtrittsöffnung 18 passgenau entspricht, während sich das andere Stirnende 24 konisch verjüngt. Die Stufenbohrung 25 umfasst einen weiteren Teil mit dem Innengewinde 20 und einen engeren Teil, der durch eine Ringschulter 26 vom engeren Teil getrennt ist. Die Passschraube 9a wird bis zum Kontakt ihres konisch verjüngten Stirnendes 24 mit der Ringschulter 26 in das Innengewinde 20 eingeschraubt und dadurch ein spielfreier Sitze des Mitnehmerblechs 10 auf dem Ausgangsteil 8 gewährleistet.

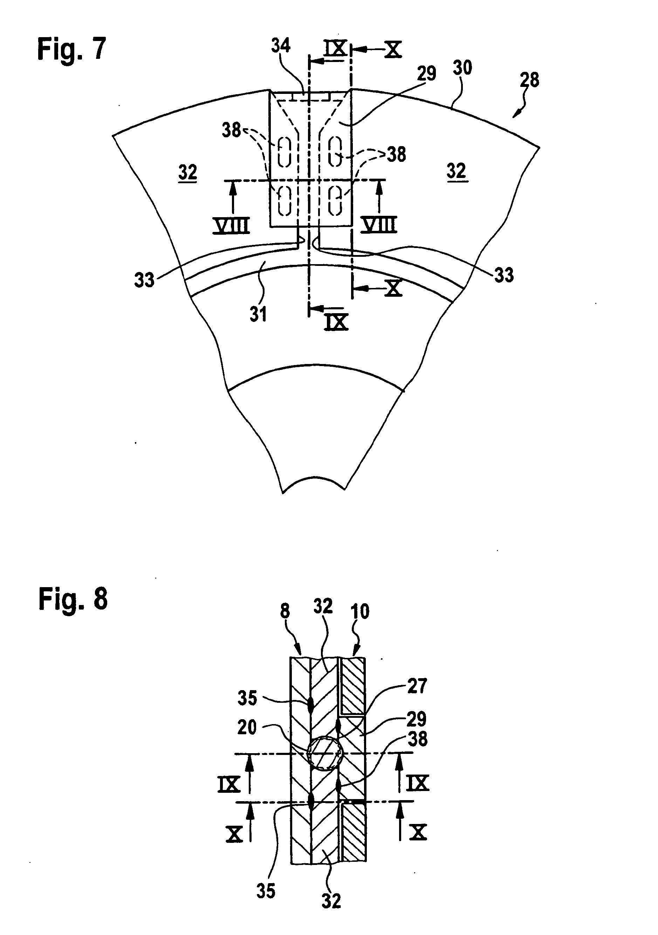

Um die Herstellungskosten des Ausgangsteils 8 zu senken, besteht dieses bei dem Ausführungsbeispiel in Fig. 7 bis 11 ebenfalls aus einem umgeformten Blechteil, das durch Stanzen und Biegen so geformt wird, dass es im Bereich von jeder Schraubverbindung eine zum Einschneiden des Innengewindes 20 dienende, im Querschnitt quadratische Gewindeöffnung 27 an vier Seiten umgibt.

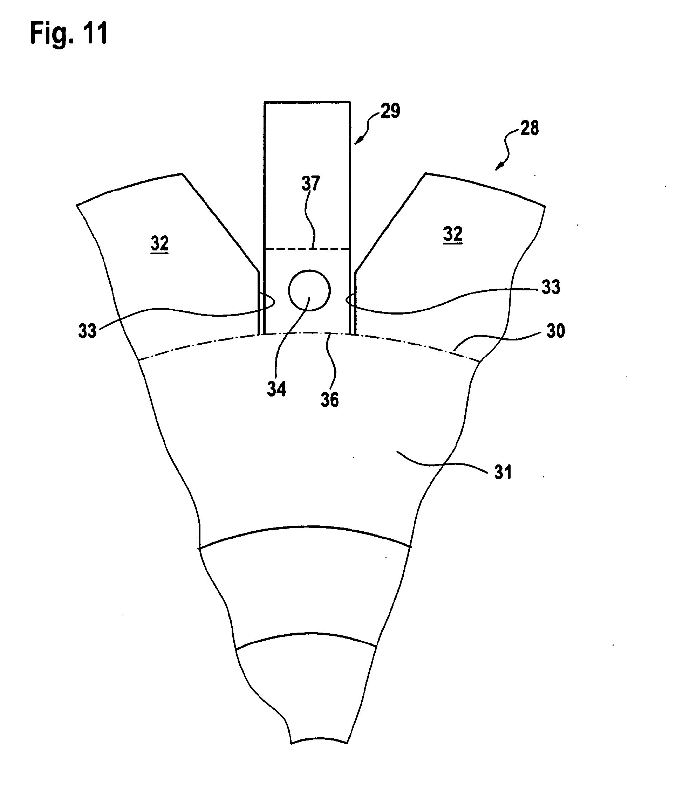

Zu diesem Zweck wird aus dem zur Herstellung des Ausgangsteils 8 bestimmten Stahlblech ein in Fig. 11 teilweise dargestellter allgemein kreisförmiger Vorformling 28 ausgestanzt, dessen Außendurchmesser größer als der Außendurchmesser des späteren Ausgangsteils 8 ist. Dieser Vorformling 28 weist im Bereich von jeder Schraubverbindung einen schmaleren, etwa rechteckigen Randlappen 29 auf, der radial nach außen über einen in strichpunktierten Linien angezeigten, dem äußeren Umfang des späteren Ausgangsteils 8 entsprechenden Umfang 30 eines kreisförmigen Mittelteils 31 des Vorformlings 28 übersteht, der in der Nähe dieses Umfangs 30 eine ausgestanzte runde Öffnung 34 aufweist und der beim Stanzen an seinen entgegengesetzten Längsseiten von zwei benachbarten breiteren Umfangsrandabschnitten 32 des Vorformlings 28 getrennt wird. Die dem Randlappen 29 zugewandten Stanzränder 33 der beiden benachbarten Umfangsrandabschnitte 32 sind so geformt, dass sie in der Nähe des Umfangs 30 in einem geringen Abstand von den Längsseitenrändern des Randlappens 29 zumindest im Wesentlichen parallel zu diesen verlaufen und dann schräg nach außen zu vom Randlappen 29 weg divergieren.

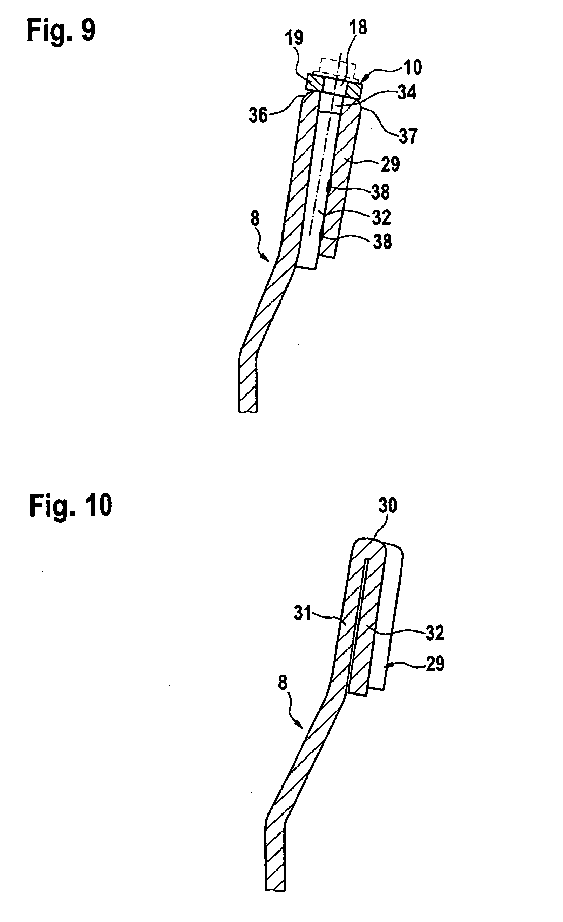

Nach dem Stanzen des Vorformlings 28 werden zuerst die Umfangsrandabschnitte 32 entlang des Umfangs 30 des späteren Ausgangsteils 8 um 180 Grad nach innen umgebogen, so dass sie mit einer ihrer Breitseiten gegen eine später dem Mitnehmerblech 10 zugewandte Breitseite des Mittelteils 31 anliegen, wie am besten in Fig. 7 und Fig. 10 dargestellt. Dabei kommen die zuvor divergierenden Teilbereiche der beiden gegenüberliegenden Stanzränder 33 von benachbarten Umfangsrandabschnitten 32 in einer parallelen Ausrichtung und mit einem der Materialstärke des Stahlblechs entsprechenden Abstand auf dem Mittelteil 31 zu liegen, während die zuvor parallelen Teilbereiche der Stanzränder 33 nunmehr nach außen zu divergieren. Anschließend werden die umgebogenen Umfangsrandabschnitte 32 beispielsweise durch Punktschweißen mit dem Mittelteil 31 verschweißt, wie zum Beispiel in Fig. 8 bei 35 angezeigt.

Danach werden auch die Randlappen 29 nach innen umgebogen, wobei der an den äußeren Umfang 30 angrenzende Teil mit der runden Öffnung 34 entlang der Biegelinie 36 in Fig. 11 um 90 Grad und der Rest entlang der Biegelinie 37 in Fig. 11 um weitere 90 Grad umgebogen wird. Dadurch kommt dieser Rest auf den an die Stanzränder 33 angrenzenden Bereichen der beiden benachbarten umgebogenen Umfangsrandabschnitte 32 zu liegen, wie in Fig. 7 dargestellt, mit denen er dann ebenfalls durch Punktschweißen verschweißt werden kann, wie in Fig. 7, 8 und 9 bei 38 angezeigt.

Dabei wird zwischen der einen Breitseite des Mittelteils 31, der gegenüberliegenden Breitseite des Randlappens 29 und den beiden einander gegenüberliegenden parallelen Teilbereichen der Stanzränder 33 der umgebogenen Umfangsrandabschnitte 32 die im Querschnitt quadratische Gewindeöffnung 27 (Fig. 8) gebildet, in die, gegebenenfalls nach einem vorherigen Nachbohren, das Innengewinde 20 eingeschnitten werden kann. Wenn die Gewindeöffnung nicht nachgebohrt wird ist das Innengewinde 20 ein so genanntes 4-Punkt-Gewinde, das nur in der Mitte der gegenüberliegenden Stanzränder 33 und in der gegenüberliegenden Breitseiten in das Blechmaterial des Ausgangsteils 8 eingeformt ist, nicht jedoch in den Ecken der Öffnung 27.

Nach der Fertigstellung kann das Ausgangsteil 8 mit dem Mitnehmerblech 10 in derselben Weise verschraubt werden, wie in Fig. 8 und 9 dargestellt und wie zuvor unter Bezugnahme auf die Figuren 1 bis 6 beschrieben. Die Verdickungen 21 werden hier von den axial über die Umfangsrandabschnitte 32 überstehenden Randlappen 29 gebildet.

Zur Vermeidung akustischer Beeinträchtigungen ist vorgesehen, dass die Ausstanzungen 22 und die Verdickungen 21 derart ausgebildet sind, dass eine Geräuscherzeugung durch die Rotation im Betrieb unterbleibt. Dies kann insbesondere durch Vermeidung von Kanten und/oder Rücksprüngen erfolgen, die beispielsweise zu einem Pfeifen führen könnten. Alternativ oder zusätzlich dazu kann in einer hier nicht dargestellten Weiterbildung vorgesehen sein, dass eine Abdeckung, insbesondere aus Kunststoff, an dem Blechteil 10 und/oder an dem Bauteil 8 angeordnet und befestigt wird.

**BEZUGSZEICHENLISTE**

| | |
|---|---|
| 1 | Zweimassenschwungrad |
| 2 | Schrauben |
| 3 | Schraubflansch |
| 4 | Kurbelwelle |
| 5 | Eingangsteil |
| 6 | Anlasserzahnkranz |
| 7 | Schraubenfedern |
| 8 | Ausgangsteil |
| 9 | Schrauben, 9a Passschraube |
| 10 | Mitnehmerblech |
| 11 | Welle |
| 12 | Getriebe |
| 13 | Schrauben |
| 14 | Teil |
| 15 | mittige Öffnung |
| 16 | Schraubenöffnungen |
| 17 | Drehachse Kurbelwelle |
| 18 | Durchtrittsöffnungen |
| 19 | umgebogener Rand Mitnehmerblech |
| 20 | Innengewinde Ausgangsteil |
| 21 | Verdickungen Ausgangsteil |
| 22 | Ausstanzungen Mitnehmerblech |
| 23 | zylindrisches Stirnende Passschraube |
| 24 | verjüngtes Stirnende Passschraube |
| 25 | Stufenbohrung |
| 26 | Ringschulter Stufenbohrung |
| 27 | Gewindeöffnung |
| 28 | Vorformling |
| 29 | Randlappen |
| 30 | Umfang Ausgangsteil |
| 31 | Mittelteil Vorformling |
| 32 | Umfangsrandabschnitte |
| 33 | Stanzränder |
| 34 | runde Öffnung |
| 35 | Punktschweißung |
| 36 | Biegelinie |
| 37 | Biegelinie |
| 38 | Punktschweißung |

## Patentansprüche

1. Verbindungsanordnung zum lösbaren drehfesten Verbinden von zwei um eine Drehachse rotierenden Bauteilen, insbesondere von zwei Bauteilen einer Drehmoment-übertragungseinrichtung, mit einer Mehrzahl von Schrauben, die jeweils durch eine Durchtrittsöffnung des einen Bauteils in ein zugehöriges Innengewinde des anderen Bauteils geschraubt sind, wobei das mit den Durchtrittsöffnungen versehene Bauteil ein umgeformtes Blechteil ist, wobei das Blechteil (10) radial einwärts von den Durchtrittöffnungen (18) mit Ausstanzungen (22) und das andere Bauteil (8) um die Innengewinde (20) herum mit Verdickungen (21) versehen ist, **dadurch gekennzeichnet, dass** die Verdickungen in axiales Richtung in oder durch die Ausstanzungen (22) ragen.

2. Verbindungsanordnung nach Anspruch 1, **dadurch gekennzeichnet, dass** die Schrauben (9, 9a) unter einem steilen Neigungswinkel oder senkrecht zur Drehachse (17) ausgerichtet sind.

3. Verbindungsanordnung nach Anspruch 1 oder 2, **dadurch gekennzeichnet, dass** Längsachsen der Schrauben (9, 9a) unter einem Winkel von mehr als 45 Grad zur Drehachse (17) der beiden Bauteile (8, 10) ausgerichtet sind.

4. Verbindungsanordnung nach einem der vorangehenden Ansprüche, **dadurch gekennzeichnet, dass** das umgeformte Blechteil (10) einen mit den Durchtrittsöffnungen (18) versehenen umgebogenen äußeren Rand (19) aufweist, der senkrecht zu den Längsachsen der Schrauben (9, 9a) ausgerichtet ist.

5. Verbindungsanordnung nach Anspruch 4, **dadurch gekennzeichnet, dass** der umgebogene äußere Rand (19) an den Durchtrittsöffnungen (18) durch Material aus den Ausstanzungen (22) verbreitert ist.

6. Verbindungsanordnung nach einem der vorangehenden Ansprüche, **dadurch gekennzeichnet, dass** mindestens eine der Schrauben (9, 9a) als Passschraube (9a) mit Passsitz in die zugehörige Durchtrittsöffnung (18) des Blechteils (10) und in eine mit dem Innengewinde (20) versehene Stufenbohrung (25) des anderen Bauteils (8) eingesetzt ist.

7. Verbindungsanordnung nach Anspruch 6, **dadurch gekennzeichnet, dass** die Passschraube (9a) ein innerhalb der Durchtrittsöffnung (18) angeordnetes zylindrisches Stirnende (23) und ein konisch verjüngtes Stirnende (24) aufweist.

8. Verbindungsanordnung nach Anspruch 7, **dadurch gekennzeichnet, dass** das Innengewinde (20) in einem weiteren Teil einer Stufenbohrung (25) angeordnet ist, der durch eine Ringschulter (26) von einem engeren Teil getrennt ist, und dass die Passschraube (9a) bis zum Kontakt des verjüngten Stirnendes (24) mit der Ringschulter (26) in das Innengewinde (20) eingeschraubt ist.

9. Verbindungsanordnung nach einem der vorangehenden Ansprüche, **dadurch gekennzeichnet, dass** zumindest eine der Verdickungen (21) und/oder Ausstanzungen (22) derart ausgebildet sind, dass sie tangential und/oder radial passgenau ineinander eingreifen.

10. Verbindungsanordnung nach einem der vorangehenden Ansprüche, **dadurch gekennzeichnet, dass** das mit den Innengewinden (20) versehene Bauteil (8) ein umgeformtes Blechteil ist.

11. Verbindungsanordnung nach Anspruch 10, **dadurch gekennzeichnet, dass** jedes der Innengewinde (20) an zwei diametral entgegengesetzten Seiten seiner Gewindeachse in gegenüberliegende, im Abstand voneinander angeordnete parallele Stanzränder (33) von Teilen (32) des umgeformten Blechteils (8) eingeformt ist.

12. Verbindungsanordnung nach Anspruch 11, **dadurch gekennzeichnet, dass** die mit den Stanzrändern (33) versehenen Teile zwei Umfangsrandabschnitte (32) des umgeformten Blechteils (8) sind, die im Abstand voneinander entlang eines äußeren Randes (30) eines allgemein rotationssymmetrischen Mittelteils (31) des umgeformten Blechteils (8) um 180 Grad nach innen über den Mittelteil (31) gebogen sind.

13. Verbindungsanordnung nach einem der Ansprüche 10 bis 12, **dadurch gekennzeichnet, dass** jedes der Innengewinde (20) an zwei diametral entgegengesetzten Seiten seiner Gewindeachse in gegenüberliegende Breitseiten von zwei Teilen (29, 31) des umgeformten Blechteils (8) eingeformt ist.

14. Verbindungsanordnung nach Anspruch 13, **dadurch gekennzeichnet, dass** einer der beiden Teile (31, 29) ein allgemein rotationssymmetrischer Mittelteil (31) des umgeformten Blechteils (8) ist und dass der andere der beiden Teile (31, 29) ein an einem äußeren Umfang (30) des Mittelteils (31) nach innen über den Mittelteil (31) gebogener Randlappen (29) ist.

15. Verbindungsanordnung nach Anspruch 14, **dadurch gekennzeichnet, dass** die gegenüberliegenden Breitseiten des Mittelteils (31) und des Randlappens (29) beiderseits von jedem Innengewinde (20) einen Abstand aufweisen, welcher der Materialstärke des umgeformten Blechteils (8) entspricht.

16. Verbindungsanordnung nach Anspruch 14 oder 15, **dadurch gekennzeichnet, dass** der Randlappen (29) mit dem äußeren Umfang des Mittelteils (31) durch einen Steg verbunden ist, der allgemein senkrecht zur Gewindeachse des Innengewindes (30) ausgerichtet ist und eine mit der Durchtrittsöffnung fluchtende Öffnung (34) aufweist.

17. Verbindungsanordnung nach einem der Ansprüche 14 bis 16, **dadurch gekennzeichnet, dass** jeder Randlappen (21) mit zwei benachbarten Umfangsrandabschnitten (32) verschweißt ist.

18. Verbindungsanordnung nach einem der vorangehenden Ansprüche, **dadurch gekennzeichnet, dass** die beiden Bauteile (8, 10) Teil eines Antriebsstrangs zwischen einer Brennkraftmaschine und einem Getriebe eines Kraftfahrzeugs sind.

19. Verbindungsanordnung nach einem der vorangehenden Ansprüche, **dadurch gekennzeichnet, dass** die Verdickungen (21) und/oder Ausstanzungen (22) im montierten Zustand zur Vermeidung einer Geräuschbildung zumindest im Wesentlichen vorsprungsfrei und/oder kantenfrei zusammenwirken.

20. Verbindungsanordnung nach einem der vorangehenden Ansprüche, **gekennzeichnet durch** mindestens eine mitrotierende Abdeckung, insbesondere Kunststoffabdeckung, zur Vermeidung einer Geräuschentwicklung.

## Claims

1. Connection assembly for releasably connecting for conjoint rotation two components which rotate about an axis of rotation, in particular two components of a torque transmission device, comprising a plurality of bolts which are each screwed through a through-opening in one component into an associated internal thread in the other component, the component provided with the through-openings being a shaped sheet metal part, the sheet metal part (10) being provided with punch-outs (22) radially inwards from the through-openings (18) and the other component (8) being provided with thickened portions (21) around the internal threads (20), **characterised in that** the thickened portions project into or through the punch-outs (22) in the axial direction.

2. Connection assembly according to claim 1, **characterised in that** the bolts (9, 9a) are oriented at a steep angle of inclination or perpendicular to the axis of rotation (17).

3. Connection assembly according to either claim 1 or claim 2, **characterised in that** longitudinal axes of the bolts (9, 9a) are oriented at an angle of more than 45 degrees to the axis of rotation (17) of the two components (8, 10).

4. Connection assembly according to any of the preceding claims, **characterised in that** the shaped sheet metal part (10) comprises a turned-over outer edge (19) which is provided with the through-openings (18) and oriented perpendicular to the longitudinal axes of the bolts (9, 9a).

5. Connection assembly according to claim 4, **characterised in that** the turned-over outer edge (19) is widened at the through-openings (18) by material from the punch-outs (22).

6. Connection assembly according to any of the preceding claims, **characterised in that** at least one of the bolts (9, 9a) is inserted as a fit bolt (9a) with a snug fit into the associated through-opening (18) in the sheet metal part (10) and into a stepped hole (25) in the other component (8), which stepped hole is provided with the internal thread (20).

7. Connection assembly according to claim 6, **characterised in that** the fit bolt (9a) comprises a cylindrical end face (23) arranged inside the through-opening (18) and a conically tapered end face (24).

8. Connection assembly according to claim 7, **characterised in that** the internal thread (20) is arranged in a wider part of a stepped hole (25), which part is separated from a narrower part by an annular shoulder (26), and **in that** the fit bolt (9a) is screwed in until the tapered end face (24) contacts the annular shoulder (26) in the internal thread (20).

9. Connection assembly according to any of the preceding claims, **characterised in that** at least one of the thickened portions (21) and/or punch-outs (22) are designed such that they interlock tangentially and/or radially with a precise fit.

10. Connection assembly according to any of the preceding claims, **characterised in that** the component (8) provided with the internal threads (20) is a shaped sheet metal part.

11. Connection assembly according to claim 10, **characterised in that** each of the internal threads (20) is formed, on two diametrically opposed sides of its thread axis, in opposing parallel punched edges (33), arranged with spacing from each other, of parts (32) of the shaped sheet metal part (8).

12. Connection assembly according to claim 11, **characterised in that** the parts provided with the punched edges (33) are two peripheral edge portions (32) of the shaped sheet metal part (8) which, along an outer edge (30) of a generally rotationally symmetrical central part (31) of the shaped sheet metal part (8), are bent inwards through 180 degrees over the central part (31) with spacing from each other.

13. Connection assembly according to any of claims 10 to 12, **characterised in that** each of the internal threads (20) is formed, on two diametrically opposed sides of its thread axis, in opposing broad sides of two parts (29, 31) of the shaped sheet metal part (8).

14. Connection assembly according to claim 13, **characterised in that** one of the two parts (31, 29) is a generally rotationally symmetrical central part (31) of the shaped sheet metal part (8) and **in that** the other of the two parts (31, 29) is an edge tab (29) which is bent inwards over the central part (31) at an outer periphery (30) of the central part (31).

15. Connection assembly according to claim 14, **characterised in that** the opposing broad sides of the central part (31) and of the edge tab (29) have, on either side of each internal thread (20), a spacing which corresponds to the material thickness of the shaped sheet metal part (8).

16. Connection assembly according to either claim 14 or claim 15, **characterised in that** the edge tab (29) is connected to the outer periphery of the central part (31) by a web which is oriented substantially perpendicular to the thread axis of the internal thread (30) and comprises an opening (34) which is flush with the through-opening.

17. Connection assembly according to any of claims 14 to 16, **characterised in that** each edge tab (29) is welded to two adjacent peripheral edge portions (32).

18. Connection assembly according to any of the preceding claims, **characterised in that** the two components (8, 10) are part of a drive train between an internal combustion engine and a gearbox of a motor vehicle.

19. Connection assembly according to any of the preceding claims, **characterised in that** the thickened portions (21) and/or punch-outs (22) interact at least in a substantially projection-free and/or edge-free manner in the mounted state, to prevent noise.

20. Connection assembly according to any of the preceding claims, **characterised by** at least one co-rotating cover, in particular a plastics material cover, for preventing noise development.

## Revendications

1. Dispositif d'assemblage pour l'assemblage solidaire en rotation et amovible de deux pièces en rotation autour d'un axe de rotation, notamment de deux pièces d'un dispositif de transmission de couple, avec une multiplicité de vis qui sont vissées chacune à travers une ouverture de passage d'une pièce dans un filetage intérieur associé de l'autre pièce, la pièce munie des ouvertures de passage étant une pièce en tôle formée, la pièce en tôle (10) étant munie de découpes (22) de façon radiale vers l'intérieur par rapport aux ouvertures de passage (18) et l'autre pièce (8) étant munie d'épaississements (21) autour du filetage intérieur (20), **caractérisé en ce que** les épaississements s'avancent en direction axiale dans ou à travers les découpes (22).

2. Dispositif d'assemblage selon la revendication 1, **caractérisé en ce que** les vis (9, 9a) sont orientées selon un angle d'inclinaison obtus ou perpendiculairement à l'axe de rotation (17).

3. Dispositif d'assemblage selon la revendication 1 ou 2, **caractérisé en ce que** les axes longitudinaux des vis (9, 9a) sont orientés selon un angle de plus de 45 degrés par rapport à l'axe de rotation (17) des deux pièces (8, 10).

4. Dispositif d'assemblage selon l'une des revendications précédentes, **caractérisé en ce que** la pièce de tôle formée (10) comporte un bord extérieur replié (19) qui est muni des ouvertures de passage (18) et qui est orienté perpendiculairement aux axes longitudinaux des vis (9, 9a).

5. Dispositif d'assemblage selon la revendication 4, **caractérisé en ce que** le bord extérieur replié (19) est élargi au niveau des ouvertures de passage (18) par de la matière issue des découpes (22).

6. Dispositif d'assemblage selon l'une des revendications précédentes, **caractérisé en ce qu'**au moins l'une des vis (9, 9a) est utilisée comme vis ajustée (9a) avec ajustement fin dans l'ouverture de passage associée (18) de la pièce en tôle (10) et dans un trou à gradin (25), muni du filetage intérieur (20), de l'autre pièce (8).

7. Dispositif d'assemblage selon la revendication 6, **caractérisé en ce que** la vis ajustée (9a) comporte une extrémité frontale (23) cylindrique agencée à l'intérieur de l'ouverture de passage (18) et une extrémité frontale (24) se rétrécissant en cône.

8. Dispositif d'assemblage selon la revendication 7, **caractérisé en ce que** le filetage intérieur (20) est agencé dans une partie plus large d'un trou à gradin (25), laquelle partie plus large est séparée d'une partie plus étroite par un épaulement annulaire (26), et **en ce que** la vis ajustée (9a) est vissée dans le filetage intérieur (20) jusqu'au contact de l'extrémité frontale rétrécie (24) avec l'épaulement annulaire (26).

9. Dispositif d'assemblage selon l'une des revendications précédentes, **caractérisé en ce qu'**au moins l'un des épaississements (21) et/ou découpes (22) sont conçus de telle sorte qu'ils pénètrent l'un dans l'autre de manière bien ajustée de façon tangentielle et/ou de façon radiale.

10. Dispositif d'assemblage selon l'une des revendications précédentes, **caractérisé en ce que** la pièce (8) munie des filetages intérieurs (20) est une pièce en tôle obtenue par formage.

11. Dispositif d'assemblage selon la revendication 10, **caractérisé en ce que** chacun des filetages intérieurs (20) est formé sur deux côtés diamétralement opposés de son axe de filetage dans des bords découpés (33), parallèles, opposés et agencés à distance l'un de l'autre, de parties (32) de la pièce en tôle formée (8).

12. Dispositif d'assemblage selon la revendication 11, **caractérisé en ce que** les parties munies des bords découpés (33) sont deux tronçons marginaux périphériques (32) de la pièce en tôle formée (8) qui, à une certaine distance l'un de l'autre le long d'un bord extérieur (30) d'une partie médiane (31), généralement symétrique en rotation, de la pièce en tôle formée (8), sont recourbés de 180 degrés vers l'intérieur au-dessus de la partie médiane (31).

13. Dispositif d'assemblage selon l'une des revendications 10 à 12, **caractérisé en ce que** chacun des filetages intérieurs (20) est formé sur deux côtés diamétralement opposés de son axe de filetage dans des côtés larges opposés de deux parties (29, 31) de la pièce en tôle formée (8).

14. Dispositif d'assemblage selon la revendication 13, **caractérisé en ce que** l'une des deux parties (31, 29) est une partie médiane (31), généralement symétrique en rotation, de la pièce en tôle formée (8) et **en ce que** l'autre des deux parties (31, 29) est une languette marginale (29) située sur une périphérie extérieure (30) de la partie médiane et recourbée vers l'intérieur au-dessus de la partie médiane (31).

15. Dispositif d'assemblage selon la revendication 14, **caractérisé en ce que** les côtés larges opposés de la partie médiane (31) et de la languette marginale (29) présentent des deux côtés une distance à chaque filetage intérieur (20) qui correspond à l'épaisseur de matière de la pièce en tôle formée (8).

16. Dispositif d'assemblage selon la revendication 14 ou 15, **caractérisé en ce que** la languette marginale (29) est reliée à la périphérie extérieure de la partie médiane (31) par une traverse qui est orientée en général perpendiculairement à l'axe du filetage intérieur (30) et qui comporte une ouverture (34) alignée avec l'ouverture de passage.

17. Dispositif d'assemblage selon l'une des revendications 14 à 16, **caractérisé en ce que** chaque languette marginale (29) est soudée à deux tronçons marginaux périphériques (32) voisins.

18. Dispositif d'assemblage selon l'une des revendications précédentes, **caractérisé en ce que** les deux pièces (8, 10) font partie d'une chaîne cinématique entre un moteur à combustion interne et une transmission d'un véhicule automobile.

19. Dispositif d'assemblage selon l'une des revendications précédentes, **caractérisé en ce que**, à l'état monté, pour éviter la formation de bruits, les épaississements (21) et/ou les découpes (22) coopèrent au moins globalement sans partie en saillie et/ou sans arête.

20. Dispositif d'assemblage selon l'une des revendications précédentes, **caractérisé par** au moins un couvercle solidaire en rotation, notamment en couvercle en matière plastique, pour éviter un développement de bruits.
